# EUROPEAN PATENT SPECIFICATION

(11) **EP 3 649 087 B1**
(45) Date of publication and mention of the grant of the patent: **18.02.2026**
(21) Application number: 17797982.0
(22) Date of filing: 04.07.2017
(51) Int. Cl.: C02F 1/52

(54) **METHOD FOR PRECIPITATION OF STRUVITE USING DESALINATION BRINE**
VERFAHREN ZUR FÄLLUNG VON STRUVIT UNTER VERWENDUNG EINER ENTSALZUNGSLAUGE
PROCÉDÉ DE PRÉCIPITATION DE STRUVITE À L'AIDE D'UNE SAUMURE DE DESSALEMENT

(43) Date of publication of application: 13.05.2020
(73) Proprietor: Suez International, 92800 Puteaux (FR)
(72) Inventor: DELAHAYE, Mathieu, 78350 Jouy en Josas (FR); DE ROTALIER, Laure, 92500 Rueil Malmaison (FR); BALSLEV, Peter, Dk 8543 Hornslet (DK)
(74) Representative: LLR
(86) International application number: PCT/IB2017/001253
(87) International publication number: WO 2019/008410

(56) References cited:
- WO-A1-2008/115758
- WO-A1-2013/040716
- WO-A2-2010/131251
- JP-A- 2013 230 414
- EDDY HERALDY ET AL: "Preparation of struvite from desalination waste", JOURNAL OF ENVIRONMENTAL CHEMICAL ENGINEERING, vol. 5, no. 2, 1 April 2017 (2017-04-01), NL, pages 1666 - 1675, XP055759163, ISSN: 2213-3437, DOI: 10.1016/j.jece.2017.03.005
- DAEGI KIM ET AL: "Use of concentrate water from seawater desalination plant as magnesium sources for struvite formation by using anaerobically digested effluent of swine wastewater", DESALINATION AND WATER TREATMENT : SCIENCE AND ENGINEERING ; DWT, vol. 57, no. 55, 25 November 2016 (2016-11-25), UK, pages 26751 - 26757, XP055759167, ISSN: 1944-3994, DOI: 10.1080/19443994.2016.1189697

## Description

### TECHNICAL FIELD OF THE INVENTION

The invention relates to the field of phosphorus recovery by struvite precipitation using brines from desalination of sea water. The invention concerns a method for precipitation of struvite from brine. The invention also concerns a reactor configured to precipitate struvite from brine.

### BACKGROUND

Resource recovery is now a concern as many type of elements are close to scarcity. It is the case of phosphorus which is in the critical raw material list of the European Union due to the progressive depletion of the phosphate rock mines, the increased demand and the non substitutable properties of phosphorus.

Indeed phosphorus is essential to human life, the human body contains about 800 grams, it is the second mineral most present in the body after calcium. Phosphorus is found in each cell and plays a central role in human metabolism, the nervous system, and the health of the skeleton. It is also vital for plants as it helps them convert nutrients into growth elements.

Therefore there is a great focus on phosphorus recovery on wastewater treatment plant.

The main technology used for recovering phosphorus on a wastewater treatment plant is the struvite precipitation. This process needs an addition of a magnesium concentrated chemical (for example MgCl2 or MgO) in order to make the precipitation happen and to secure good phosphorus recovery yield. Known phosphorous recovery systems and methods are disclosed in WO2013/040716A1 and WO2008/115758A1.

However magnesium is a quite expensive reactant and can represent more than half of the operating cost of a struvite precipitation reactor and can overcome the benefits generated from the sale of struvite.

Brine disposal is also a great concern on a desalination plant. A reverse osmosis plant is a manufacturing plant where the process of reverse osmosis takes place, resulting in an amount of salty brine waste. In other words, the reverse osmosis desalination plant extracts a large volume of water and discharges a dense brine concentrate back into the environment. Desalination brines have a potentially strong impact on both physicochemical and ecological attributes of receiving environments.

Brine disposal costs are high today, between 5 and 33% of total desalination costs. Treatment costs typically depend on the volume or quantity of brine and their characteristics.

Technologies range from very simple evaporation ponds to very complex and evapo-cristallization systems. Most of the desalination processes just use brine dilution before disposal in the sea in order to reduce the impact of the brine in the local environment. Brine disposal directly in the sea could have a negative impact on the environment due to the higher salt concentration in the brine. This can gradually kill the natural maritime faunae and flora and cause other serious environmental hazards.

From this, it results that there is a strong need on the one hand to reduce the impact of brine and on the other hand to work on resource recovery.

A lot of studies have been done and are on-going to use magnesium from the sea or from desalination brines to help precipitate phosphorus in phosphorus recovery reactors. Examples of the use of desalination brine in struvite precipitation can be found in WO2010/131251A2, JP2013 230414A, Eddy Heraldy et al: "Preparation of struvite from desalination waste", Journal of Environmental Chemical Engineering, vol. 5, no. 2, 1 April 2017 , pages 1666-1675 and Daegi Kim et al: "Use of concentrate water from seawater desalination plant as magnesium sources for struvite formation by using anaerobically digested effluent of swine wastewater", Desalination and water treatment : science and engineering ; DWT, vol. 57, no. 55, 25 November 2016, pages 26751-26757.

However, so far, no commercial applications have reached the market. There is still some technical difficulties to overcome troubles linked to brine concentration and composition, phosphorus recovery process and unwanted precipitation and economical viability of the process. There are technological constraints to use desalination brine from sea water as a source of magnesium to recover phosphorus. Indeed in the sea water, there also coexist other ions like calcium ions Ca²⁺ which lead to unwanted precipitation. That is why so far it is not recommended to consider phosphorus recovery by precipitation of struvite in a wastewater treatment system using brine since it results in the unwanted precipitation mentioned before which can lead to clogging of pipes, pumps and other equipments of the recovery process.

### SUMMARY OF THE INVENTION

The invention aims to provide a solution to recover phosphorus by struvite precipitation by the use of brine from desalination plants as a source of magnesium for the struvite precipitation without being faced to unwanted precipitation. The invention has also positive effects on the wastewater treatment by helping flocculation of sludge when connected to a wastewater treatment plant.

To this end, the subject of the invention is a method for precipitation of struvite from a desalination brine within a phosphorus recovery reactor according to claim 1.

The desalination brine is a source of magnesium for struvite precipitation. The recirculation loop enables the dilution of the magnesium and calcium, as well as a low ammonia concentration, so that no struvite or other unwanted precipitations occur there. Struvite precipitation occurs in the reactor where the conditions for struvite precipitation are fulfilled.

Advantageously, before the step of injection, the method according to the invention may comprise a step of conditioning of the desalination brine during a predetermined duration. This step enables to adjust the pH of the desalination brine before injection in the reactor to reach the pH of precipitation of the struvite.

Advantageously, the method according to the invention may comprise a step of injection of at least a part of the treated effluent at an inlet of a wastewater treatment plant, after the step of injection. This step enables to feed the wastewater treatment plant with a diluted brine. Furthermore, the treated effluent comprises Ca²⁺ ions having a positive effect on wastewater treatment by flocculation.

Advantageously, the step of injection of the desalination brine of the method according to the invention is performed downstream of a recirculation pump in the phosphorus recovery reactor. Since turbulence can lead to more struvite precipitation, the step enables to avoid the precipitation of struvite within the recirculation loop.

The invention also relates to a phosphorus recovery reactor according to claim 5.

According to another embodiment of the invention, the phosphorus recovery reactor is connected to a conditioning unit configured to condition the desalination brine during a predetermined duration.

According to another embodiment of the invention, the phosphorus recovery reactor is connected to a wastewater treatment plant, so as to inject at least a part of the treated effluent at an inlet of the wastewater treatment plant.

According to another embodiment of the invention, the phosphorus recovery reactor comprises a recirculation pump and the point of injection of the desalination brine in the recirculation loop is located downstream the recirculation pump.

### BRIEF DESCRIPTION OF THE DRAWINGS

The accompanying drawings illustrate various non-limiting, exemplary, innovative aspects in accordance with the present description:
- Figure 1 schematically represents a first embodiment of the phosphorus recovery reactor according to the invention;
- Figure 2 schematically represents a second embodiment of the phosphorus recovery reactor according to the invention;
- Figure 3 schematically represents a third embodiment of the phosphorus recovery reactor according to the invention;
- Figure 4 schematically represents a fourth embodiment of the phosphorus recovery reactor according to the invention;
- Figure 5 schematically represents a block diagram with the step(s) of a method for precipitation of struvite according to the invention;
- Figure 6 schematically represents a block diagram with the step(s) of a variation of the method for precipitation of struvite according to the invention.

For the sake of clarity, the same elements have the same references in the various figures.

### DETAILED DESCRIPTION

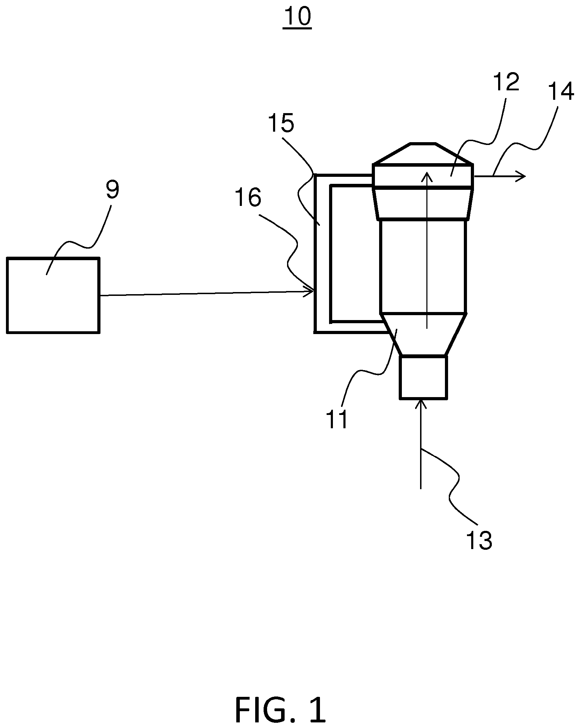

**Figure 1** schematically represents a first embodiment of the phosphorus recovery reactor according to the invention. The phosphorus recovery reactor 10 has an inlet portion 11 and an outlet portion 12, and is configured to be fed at the inlet portion 11 with a water stream 13 intended to circulate throughout the phosphorus recovery reactor 10 from the intlet portion 11 to the outlet portion 12. The phosphorus recovery reactor may be a fluidized bed reactor having a conical bottom from where the granules of struvite may be evacuated.

According to the invention, the phosphorus recovery reactor 10 comprises a recirculation loop 15 configured to take the water stream 13 intended to circulate throughout the phosphorus recovery reactor 10 from the outlet portion 12 to the inlet portion 11 and the recirculation loop 15 comprises a point of injection 16 of a desalination brine 9 in the recirculation loop 15. The recirculation loop 15 takes the flow from the top of the phosphorus recovery reactor 10 to the bottom in order to get the best conditions for granulation of struvite. The injection of desalination brine 9 in the recirculation loop 15 helps diluting the magnesium and especially the calcium present in the desalination brine 9, so as to prevent unwanted precipitation. For example, a low concentration of calcium in presence of phosphate compared to magnesium ions prevents the precipitation of calcium apatite.

Desalination brine 9 is therefore not introduced directly in the phosphorus recovery reactor 10 for struvite precipitation, to avoid that unwanted events occur. Indeed, concentrations in commonly produced desalination brines could range between 1 to 5 g/L of magnesium and 0,5 to 2 g/L of calcium, with chloride concentration between 30 to 75 g/L. High levels of chloride have an impact on material used for the reactor 10. Concrete or steel have to be chosen with either specific coatings or specific alloys which increase the cost of the reactor and deteriorate the return on investment of the phosphorus recovery plant. Chloride can also have an impact on biological treatment located in the wastewater treatment plant. Calcium ions may interfere in certain conditions with the precipitation of pure struvite. The phosphorus recovery reactor 10 according to the invention therefore controls struvite precipitation and avoids any unwanted precipitation (like calcium based apatite or struvite precipitation in unwanted places).

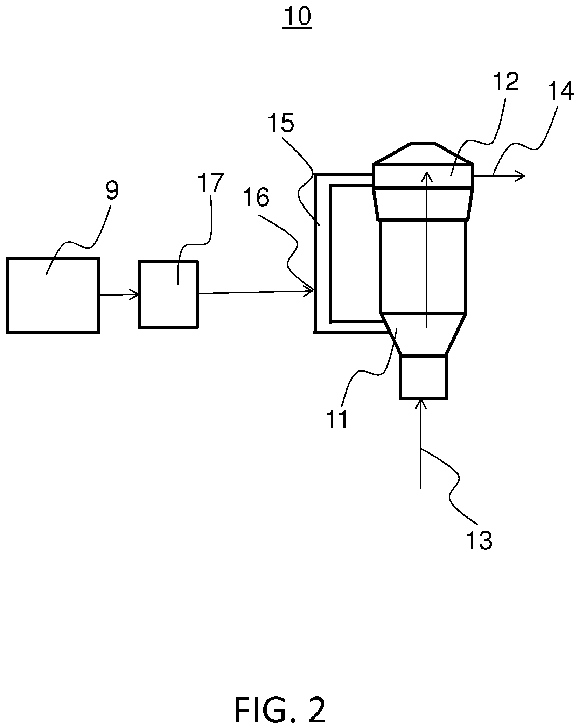

**Figure 2** schematically represents a second embodiment of the phosphorus recovery reactor 10 according to the invention. All elements of the phosphorus recovery reactor are identical to those presented in Figure 1. In this second embodiment, the phosphorus recovery reactor is connected to a conditioning unit 17 configured to condition the desalination brine 9 during a predetermined duration. This enables a specific conditioning of the desalination brine 9 to adjust the pH of the desalination brine before injection in the phosphorus recovery reactor 10, by addition of chemical like sodium hydroxide and/or by aeration (or air stripping) to remove carbone dioxide which raises the pH. Preferably, the pH is adjusted around 8,5 - 9 which is the pH of struvite precipitation. The predetermined duration varies depending on the type of desalination brine. It is typically of somes hours, like 2 or 4 hours.

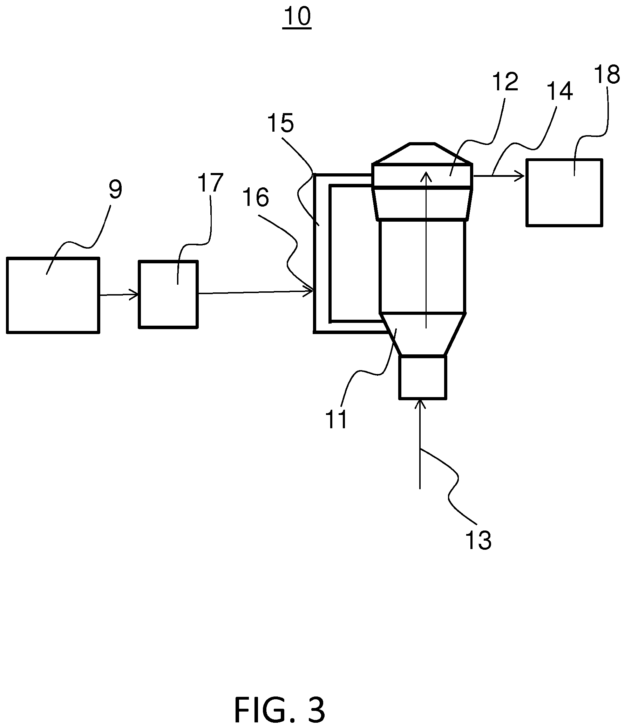

**Figure 3** schematically represents a third embodiment of the phosphorus recovery reactor 10 according to the invention. All elements of the phosphorus recovery reactor are identical to those presented in Figure 2. It may be noted that there also may not be a conditioning unit 17 in the third embodiment of the invention. In this third embodiment, the phosphorus recovery reactor 10 is connected to a wastewater treatment plant 18, so as to inject at least a part of the treated effluent 14 at an inlet of the wastewater treatment plant 18. This is a way to discharge brine and at the same time this enables to feed the wastewater treatment plant with a diluted brine. Moreover, the treated effluent 14 comprises Ca²⁺ ions having a positive effect on wastewater treatment by flocculation.

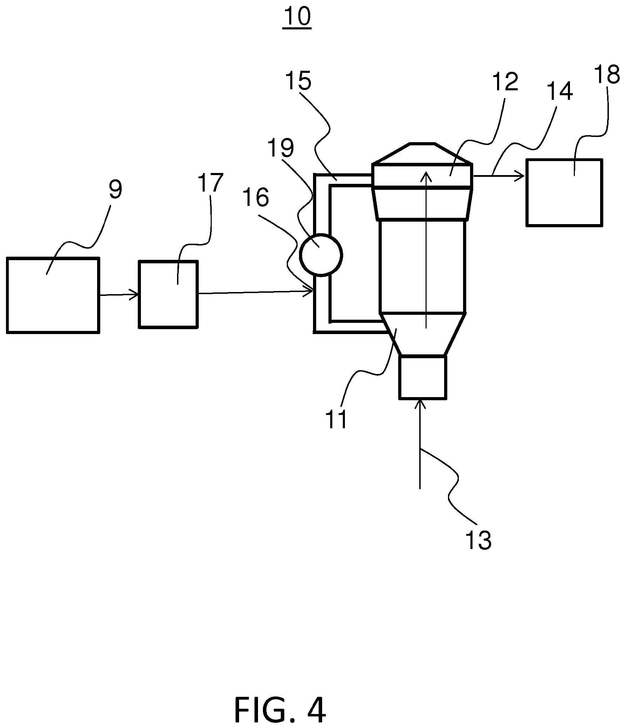

**Figure 4** schematically represents a fourth embodiment of the phosphorus recovery reactor 10 according to the invention. All elements of the phosphorus recovery reactor are identical to those presented in Figure 3. It can be noted that the conditioning unit 17 is not compulsory in the fourth embodiment of the invention, so the connection the connection to the wastewater treatment plant 18. In this fourth embodiment, the phosphorus recovery reactor 10 comprises a recirculation pump 19 to enable the recirculation of the water stream 13, circulating throughout the phosphorus recovery reactor 10, from the outlet portion 12 to the inlet portion 11. In this preferred embodiment of the invention, the point of injection 16 of the desalination brine 9 in the recirculation loop 15 is located downstream the recirculation pump 19. Since turbulence is favorable to more struvite precipitation, the point of injection 16 downstream the recirculation pump 19 makes it possible that the desalination brine injected in the recirculation loop 15 does not go through the recirculating pump 19. From this, it results that no precipitation of struvite occurs within the recirculation loop.

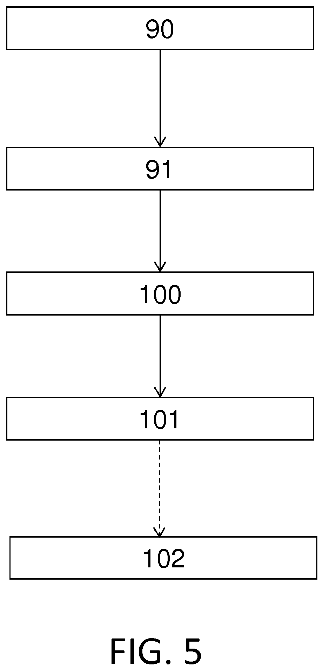

**Figure 5** schematically represents a block diagram with the step(s) of a method for precipitation of struvite according to the invention. The method for precipitation of struvite from a desalination brine 9 within a phosphorus recovery reactor 10 having an inlet portion and an outlet portion, comprises the step 90 of feeding a water stream 13 at the inlet portion 11 of the phosphorus recovery reactor 12 and the step 91 of circulating said water stream 13 throughout the phosphorus recovery reactor 10, from the inlet portion 11 to the outlet portion 12, resulting in a treated effluent 14 flowing through the outlet portion 12. According to the invention, the method further comprises a step 100 of recirculating at least a part of the water stream 13 circulating throughout the phosphorus recovery reactor 10 in a recirculation loop 15 of the phosphorus recovery reactor 10 from the outlet portion 12 to the inlet portion 11, and a step 101 of injection of the desalination brine 9 in the recirculation loop 15 of the phosphorus recovery reactor 16 at a point of injection 16. Using desalination brine 9 as a source of magnesium for struvite precipitation is both a way to discharge brine 9 and to benefit from the magnesium present in the brine 9. The step 100 of recirculating enables the dilution of the magnesium and calcium, as well as a low ammonia concentration, so that no struvite or other unwanted precipitations occur there. Struvite precipitation can happen in the phosphorus recovery reactor 10 where the conditions for struvite precipitation are fulfilled, that is to say where magnesium, ammonia and phosphate are at the good concentration levels. Struvite is formed in the phosphorus recovery reactor 10 as small granules. As the granules grow bigger, they get to the conical bottom of the phosphorus recovery reactor 10 where they are evacuated.

Advantageously, before the step 101 of injection of the desalination brine 9 in the recirculation loop 15, the method according to the invention may comprise a step 102 of conditioning of the desalination brine 9 during a predetermined duration of typically about some hours. This step enables to adjust the pH of the desalination brine 9 before injection in the reactor to reach the pH of precipitation of the struvite. During the step 102 of specific conditioning of the desalination brine 9, the pH of the desalination brine is adjusted before injection in the phosphorus recovery reactor 10, either by addition of chemical like sodium hydroxide or by aeration (or air stripping) to remove carbone dioxide which raises the pH. Preferably, the pH is adjusted around 8,5 - 9 which is the pH of struvite precipitation. The step 102 of conditioning is advantageous to get a suitable pH of the desalination brine 9 but is not compulsory.

Advantageously, the step 101 of injection of the desalination brine 9 of the method according to the invention is performed downstream of the recirculation pump 19 of the phosphorus recovery reactor 10. Since turbulence can lead to more struvite precipitation, the step enables to avoid that the desalination brine 9 injected in the recirculation loop 15 go through the recirculating pump 19 and therefore avoids the precipitation of struvite within the recirculation loop.

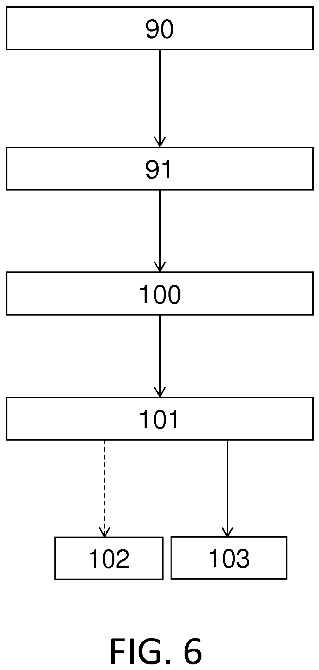

**Figure 6** schematically represents a block diagram with the step(s) of a variation of the method for precipitation of struvite according to the invention. All elements of the block diagram are identical to those presented in Figure 5. It may be noted that the step 102 of conditioning is represented but is not compulsory, even if it is an advantage to condition the desalination brine 9 before its injection in the recirculation loop 15. According to the invention, the method may comprise a step 103 of injection of at least a part of the treated effluent 14 at an inlet of a wastewater treatment plant 18, after the step 101 of injection of the desalination brine 9 in the recirculation loop 15. This step enables to feed the wastewater treatment plant 18 with a diluted brine. Furthermore, the treated effluent comprises Ca²⁺ ions having a positive effect on wastewater treatment by flocculation.

The examples disclosed in this specification are only illustrative of some embodiments of the invention. They do not in any way limit the scope of said invention which is defined by the appended claims.

## Claims

1. Method for precipitation of struvite from a desalination brine (9) within a phosphorus recovery reactor (10) having an inlet portion (11) and an outlet portion (12), the inlet portion (11) comprising a lower region and an upper region located above the lower region, the method comprising the steps of
• feeding (90) a water stream (13) at the lower region of the inlet portion (11) of the phosphorus recovery reactor (10)
• circulating (91) said water stream (13) throughout the phosphorus recovery reactor (10) resulting in a treated effluent (14) flowing through a first outlet of the outlet portion (12),
**characterized in that** the method further comprises
• a step (100) of recirculating at least a part of the water stream (13) circulating throughout the phosphorus recovery reactor (10) in a recirculation loop (15) of the phosphorus recovery reactor (10) from a second outlet of the outlet portion (12) to the upper region of the inlet portion (11), and
• a step (101) of injection of the desalination brine (9) in the recirculation loop (15) of the phosphorus recovery reactor (10) at a point of injection (16).

2. Method according to claim 1, **characterized in that** it comprises, before the step (101) of injection, a step (102) of conditioning of the desalination brine (9) during a predetermined duration.

3. Method according to one of the preceding claims, wherein the method comprises, after the step (101) of injection, a step (103) of injection of at least a part of the treated effluent (14) at an inlet of a wastewater treatment plant (18).

4. Method according to one of the preceding claims, wherein the step (101) of injection of the desalination brine (9) is performed downstream of a recirculation pump (19) in the phosphorus recovery reactor.

5. Phosphorus recovery reactor (10) having an inlet portion (11) and an outlet portion (12), the inlet portion (11) comprising a lower region and an upper region located above the lower region, the phosphorus recovery reactor (10) configured to be fed at the lower region of the inlet portion (11) with a water stream (13) and to circulate said water stream (13) throughout the phosphorus recovery reactor (10) resulting in a treated effluent (14) flowing through a first outlet of the outlet portion (12), **characterized in that**
• the phosphorus recovery reactor (10) comprises a recirculation loop (15) configured to recirculate at least a part of the water stream (13), intended to circulate throughout the phosphorus recovery reactor (10), from a second outlet of the outlet portion (12) to the upper region of the inlet portion (11)
• and **in that** the recirculation loop (15) comprises a point of injection (16) of a desalination brine (9) in the recirculation loop (15).

6. Phosphorus recovery reactor (10) according to claim 5, **characterized in that** it is connected to a conditioning unit (17) configured to condition the desalination brine (9) during a predetermined duration.

7. Phosphorus recovery reactor (10) according to claim 5 or 6, **characterized in that** it is connected to a wastewater treatment plant (18), so as to inject at least a part of the treated effluent (14) at an inlet of the wastewater treatment plant (18).

8. Phosphorus recovery reactor (10) according to claims 5 to 7, **characterized in that**
• the phosphorus recovery reactor (10) comprises a recirculation pump (19),
• and **in that** the point of injection (16) of the desalination brine (9) in the recirculation loop (15) is located downstream the recirculation pump (19).

## Patentansprüche

1. Verfahren zur Ausfällung von Struvit aus einer Entsalzungssole (9) innerhalb eines Phosphorrückgewinnungsreaktors (10), aufweisend einen Einlassabschnitt (11) und einen Auslassabschnitt (12), wobei der Einlassabschnitt (11) eine untere Region und eine obere Region, die sich oberhalb der unteren Region befindet, umfasst, wobei das Verfahren die folgenden Schritte umfasst:
• Zuführen (90) eines Wasserstroms (13) in der unteren Region des Einlassabschnitts (11) des Phosphorrückgewinnungsreaktors (10),
• Zirkulieren (91) des Wasserstroms (13) durch den Phosphorrückgewinnungsreaktor (10), wodurch ein behandeltes Abwasser (14) durch einen ersten Auslass des Auslassabschnitts (12) fließt,
**dadurch gekennzeichnet, dass** das Verfahren des Weiteren umfasst:
• einen Schritt (100) des Rezirkulierens mindestens eines Teils des durch den Phosphorrückgewinnungsreaktor (10) zirkulierenden Wasserstroms (13) in einer Rezirkulationsschleife (15) des Phosphorrückgewinnungsreaktors (10) von einem zweiten Auslass des Auslassabschnitts (12) zu der oberen Region des Einlassabschnitts (11), und
• einen Schritt (101) des Einleitens der Entsalzungssole (9) in die Rezirkulationsschleife (15) des Phosphorrückgewinnungsreaktors (10) an einem Einleitungspunkt (16).

2. Verfahren nach Anspruch 1, **dadurch gekennzeichnet, dass** es vor dem Schritt (101) des Einleitens einen Schritt (102) des Konditionierens der Entsalzungssole (9) während einer zuvor festgelegten Dauer umfasst.

3. Verfahren nach einem der vorangehenden Ansprüche, wobei das Verfahren nach dem Schritt (101) des Einleitens einen Schritt (103) des Einleitens mindestens eines Teils des behandelten Abwassers (14) an einem Einlass einer Abwasserbehandlungsanlage (18) umfasst.

4. Verfahren nach einem der vorangehenden Ansprüche, wobei der Schritt (101) des Einleitens der Entsalzungssole (9) stromabwärts einer Rezirkulationspumpe (19) in dem Phosphorrückgewinnungsreaktor durchgeführt wird.

5. Phosphorrückgewinnungsreaktor (10), aufweisend einen Einlassabschnitt (11) und einen Auslassabschnitt (12), wobei der Einlassabschnitt (11) eine untere Region und eine obere Region, die sich oberhalb der unteren Region befindet, umfasst, wobei der Phosphorrückgewinnungsreaktor (10) dazu eingerichtet ist, an der unteren Region des Einlassabschnitts (11) einen Wasserstrom (13) eingespeist zu bekommen und diesen Wasserstrom (13) durch den Phosphorrückgewinnungsreaktor (10) zu zirkulieren, wodurch ein behandelter Abwasserstrom (14) entsteht, der durch einen ersten Auslass des Auslassabschnitts (12) fließt, **dadurch gekennzeichnet, dass**:
• der Phosphorrückgewinnungsreaktor (10) eine Rezirkulationsschleife (15) umfasst, die dazu eingerichtet ist, mindestens einen Teil des Wasserstroms (13), der dafür vorgesehen ist, durch den Phosphorrückgewinnungsreaktor (10) hindurch zu zirkulieren, von einem zweiten Auslass des Auslassabschnitts (12) zu der oberen Region des Einlassabschnitts (11) zu rezirkulieren,
• und dadurch, dass die Rezirkulationsschleife (15) einen Einleitungspunkt (16) für eine Entsalzungssole (9) in der Rezirkulationsschleife (15) umfasst.

6. Phosphorrückgewinnungsreaktor (10) nach Anspruch 5, **dadurch gekennzeichnet, dass** er mit einer Konditionierungseinheit (17) verbunden ist, die dazu eingerichtet ist, die Entsalzungssole (9) während einer zuvor festgelegten Dauer zu konditionieren.

7. Phosphorrückgewinnungsreaktor (10) nach Anspruch 5 oder 6, **dadurch gekennzeichnet, dass** er mit einer Abwasserbehandlungsanlage (18) verbunden ist, um mindestens einen Teil des behandelten Abwassers (14) an einem Einlass der Abwasserbehandlungsanlage (18) einzuleiten.

8. Phosphorrückgewinnungsreaktor (10) nach den Ansprüchen 5 bis 7, **dadurch gekennzeichnet, dass**:
• der Phosphorrückgewinnungsreaktor (10) eine Rezirkulationspumpe (19) umfasst,
• und dadurch, dass sich der Einleitungspunkt (16) der Entsalzungssole (9) in der Rezirkulationsschleife (15) stromabwärts der Rezirkulationspumpe (19) befindet.

## Revendications

1. Procédé de précipitation de struvite à partir d'une saumure de dessalement (9) dans un réacteur de récupération du phosphore (10) comportant une partie d'entrée (11) et une partie de sortie (12), la partie d'entrée (11) comprenant une région inférieure et une région supérieure située au-dessus de la région inférieure, le procédé comprenant les étapes suivantes :
• alimenter (90) un flux d'eau (13) dans la région inférieure de la partie d'entrée (11) du réacteur de récupération du phosphore (10),
• faire circuler (91) ledit flux d'eau (13) dans l'ensemble du réacteur de récupération du phosphore (10), ce qui entraîne l'écoulement d'un effluent traité (14) à travers une première sortie de la partie de sortie (12),
**caractérisé en ce que** le procédé comprend en outre :
• une étape (100) de recirculation d'au moins une partie du flux d'eau (13) circulant dans l'ensemble du réacteur de récupération du phosphore (10) dans une boucle de recirculation (15) du réacteur de récupération du phosphore (10), depuis une deuxième sortie de la partie de sortie (12) vers la région supérieure de la partie d'entrée (11), et
• une étape (101) d'injection de la saumure de dessalement (9) dans la boucle de recirculation (15) du réacteur de récupération du phosphore (10) en un point d'injection (16).

2. Procédé selon la revendication 1, **caractérisé en ce qu'**il comprend, avant l'étape (101) d'injection, une étape (102) de conditionnement de la saumure de dessalement (9) pendant une durée prédéterminée.

3. Procédé selon l'une quelconque des revendications précédentes, dans lequel le procédé comprend, après l'étape (101) d'injection, une étape (103) d'injection d'au moins une partie de l'effluent traité (14) à une entrée d'une station d'épuration des eaux usées (18).

4. Procédé selon l'une quelconque des revendications précédentes, dans lequel l'étape (101) d'injection de la saumure de dessalement (9) est réalisée en aval d'une pompe de recirculation (19) dans le réacteur de récupération du phosphore.

5. Réacteur de récupération du phosphore (10) comportant une partie d'entrée (11) et une partie de sortie (12), la partie d'entrée (11) comprenant une région inférieure et une région supérieure située au-dessus de la région inférieure, le réacteur de récupération du phosphore (10) étant configuré pour être alimenté, au niveau de la région inférieure de la partie d'entrée (11), par un flux d'eau (13) et pour faire circuler ledit flux d'eau (13) dans l'ensemble du réacteur de récupération du phosphore (10), ce qui entraîne l'écoulement d'un effluent traité (14) à travers une première sortie de la partie de sortie (12),
**caractérisé en ce que** :
• le réacteur de récupération du phosphore (10) comprend une boucle de recirculation (15) configurée pour recirculer au moins une partie du flux d'eau (13), destiné à circuler dans l'ensemble du réacteur de récupération du phosphore (10), depuis une deuxième sortie de la partie de sortie (12) vers la région supérieure de la partie d'entrée (11),
• et **en ce que** la boucle de recirculation (15) comprend un point d'injection (16) d'une saumure de dessalement (9) dans la boucle de recirculation (15).

6. Réacteur de récupération du phosphore (10) selon la revendication 5, **caractérisé en ce qu'**il est relié à une unité de conditionnement (17) configurée pour conditionner la saumure de dessalement (9) pendant une durée prédéterminée.

7. Réacteur de récupération du phosphore (10) selon la revendication 5 ou 6, **caractérisé en ce qu'**il est relié à une station d'épuration des eaux usées (18), de manière à injecter au moins une partie de l'effluent traité (14) à une entrée de la station d'épuration des eaux usées (18).

8. Réacteur de récupération du phosphore (10) selon les revendications 5 à 7, **caractérisé en ce que** :
• le réacteur de récupération du phosphore (10) comprend une pompe de recirculation (19),
• et **en ce que** le point d'injection (16) de la saumure de dessalement (9) dans la boucle de recirculation (15) est situé en aval de la pompe de recirculation (19).
